Europäisches Patentamt

European Patent Office

Office européen des brevets

(19)

(11) Veröffentlichungsnummer: **0 259 538**
**B1**

(12) **EUROPÄISCHE PATENTSCHRIFT**

(45) Veröffentlichungstag der Patentschrift:
**27.12.90**

(21) Anmeldenummer: **87103436.9**

(22) Anmeldetag: **10.03.87**

(51) Int. Cl.⁵: **G01B 7/30, H02K 24/00**

(54) Winkelsensor.

(30) Priorität: **12.09.86 DE 3631042**

(43) Veröffentlichungstag der Anmeldung:
**16.03.88 Patentblatt 88/11**

(45) Bekanntmachung des Hinweises auf die Patenterteilung:
**27.12.90 Patentblatt 90/52**

(84) Benannte Vertragsstaaten:
**DE FR GB IT SE**

(56) Entgegenhaltungen:
**CH-A- 628 429**
**US-A- 4 227 144**

**ELEKTRONIK 16, 10. August 1984, H. Maier:**
**"Wegmessung und Lagerregelung bei**
**Industrierobotern", FRANZIS-VERLAG, München,**
**Seiten 103-107**

(73) Patentinhaber: **VDO Adolf Schindling AG,**
**Gräfstrasse 103, D-6000 Frankfurt/Main 90(DE)**

(72) Erfinder: **Wallrafen, Werner, Birnheck 11,**
**D-6233 Kelkheim 3(DE)**

(74) Vertreter: **Klein, Thomas, Dipl.-Ing. (FH), Sodener**
**Strasse 9 Postfach 6140, D-6231 Schwalbach a. Ts.(DE)**

ACTORUM AG

## Beschreibung

Die Erfindung bezieht sich auf einen Winkelsensor mit einem drehbar angeordneten Geberteil und einem feststehenden Geberteil, wobei das drehbare Geberteil eine an eine Wechselstromquelle anschließbare Spule aufweist, die auf einem Träger spiralig aufgewickelt ist und sich beiderseits einer Drehachse mit quer zu dieser verlaufender Längsachse erstreckt, und das feststehende Geberteil mindestens einen im Abstand der Spule gegenüberstehenden Sensor für elektromagnetische Felder enthält.

Es sind elektromagnetische bzw. induktive Winkelgeber (Resolver) bekannt, die jeweils einen Stator mit Statorwicklungen und einen Rotor mit mindestens einer Rotorwicklung aufweisen. Mit diesen Winkelgebern läßt sich mit hoher Genauigkeit mindestens ein Signal erzeugen, das eine Funktion der jeweiligen Winkelposition des Rotor ist. Derartige induktive Winkelgeber sind relativ aufwendig und teuer.

Aus "Elektronik 16, 10. August 1984, Seiten 1–3–107" ist ein Resolver bekannt, der eine Wicklung an einem Rotor und zwei exakt um 90 Grad gegeneinander verdrehte Wicklungen in einem Stator besitzt. In die Rotorwicklung wird eine sinusförmige Referenzspannung eingespeist, so daß an den Statorwicklungen Spannungen derselben Frequenz, die gegeneinander um 90 Grad phasenverschoben sind erscheinen und deren Amplituden vom Drehwinkel des Rotors bestimmt sind.

Winkelgeber, die mit anderen Bauelementen, z.B. Hall-Sensoren, Feldplatten und dergleichen ausgestattet sind, lassen sich zwar kostengünstiger herstellen, sind jedoch relativ ungenau. Optische Winkelencoder erfordern hohe Positioniergenauigkeiten und sind in Ausführungen mit hoher Genauigkeit aufwendig und teuer.

Der Erfindung liegt die Aufgabe zugrunde, einen berührungslos arbeitenden, elektromagnetischen Winkelsensor mit einem drehbar angeordneten Geberteil und einem feststehenden Geberteil zu entwickeln, der bei einfachem mechanischem Aufbau die Genauigkeit eines Resolvers erreicht.

Die Aufgabe wird erfindungsgemäß dadurch gelöst, daß das feststehende Geberteil sich beiderseits der Drehachse quer zu dieser erstreckt und ausgangsseitig mit einer Schaltung verbunden ist, die Schaltungskomponenten zur Kompensation oder Teilkompensation der durch Asymmetrien bzw. Ungenauigkeiten in der Anordnung der Geberteile verursachten Abweichungen des oder der Ausgangssignale(s) des feststehenden Geberteils von einem festgelegten Zusammenhang zwischen der Winkelposition des drehbaren Geberteils und dem oder den Ausgangssignal(en) des feststehenden Geberteils aufweist. Der vorstehend erwähnte Zusammenhang wird durch das Meßprinzip des Winkelsensors bestimmt.

Das Meßprinzip legt die Funktion fest, die bei präziser Ausrichtung und genauer Ausbildung der Geberteile erreichbar ist. Die Erfindung beruht auf dem Prinzip, die Abweichungen von dieser Funktion mittels einer Schaltung zu kompensieren. Dies bedeutet, daß gewisse Toleranzen bei der Montage der Geberteile und dem Aufbau der Geberteile zulässig sind, ohne daß sich diese ungünstig auf die Genauigkeit der Vorrichtung auswirken. Ein Ausgleich dieser Toleranzen in der Schaltung ist leichter und einfacher durchführbar, als die genaue Einhaltung sehr enger Toleranzen im mechanischen Aufbau und in der gegenseitigen Ausrichtung der beiden Geberteile mit relativ einfachen, ohne großen Aufwand herstellbaren und montierbaren Geberteilen läßt sich daher ein relativ genauer Winkelsensor herstellen.

Vorzugsweise sind die Komponenten solche zur Kompensation der Asymmetrien und/oder der Signalamplituden und/oder des Spulenwinkelversatzes.

Bei einer bevorzugten Ausführungsform weist das feststehende Geberteile zwei um 90° mit ihren Längsachsen gegeneinander versetzte, spiralig aufgewickelte Spulen auf, deren Ausgänge je an die Schaltung angeschlossen sind. Mit dieser Vorrichtung werden in Abhängigkeit von der Winkelstellung des drehbaren Geberteils je ein sinusförmiges und ein cosinusförmiges Ausgangssignal erzeugt. Diese Signalformen stimmen daher bei relativ einfachem Aufbau mit denjenigen der Ausgänge eines Resolvers überein.

Vorzugsweise ist mindestens die Spule des drehbaren Geberteils auf einen ferromagnetischen Kern aufgewickelt, in dessen äußerem Feld das feststehende Geberteil angeordnet ist. Der ferromagnetische Kern ist zweckmäßigerweise ein Ferritkern. Hierdurch wird am Ort des feststehenden Geberteils eine höhere Feldstärke erzielt.

Günstig ist es, die Spule des drehbar angeordneten Geberteils auf einem quaderförmigen Kern aus hochpermeablem Werkstoff und die Spulen des feststehenden Geberteils auf einem zylindrischen Scheibenkern aus einem hochpermeablen Werkstoff anzuordnen. Die beiden Spulen des feststehenden Geberteils sind hierbei über die Stirnseiten des Scheibenkerns 90° gegeneinander versetzt gewickelt. Die eine Stirnseite des Scheibenkerns ist der einen Breitseite des quaderförmigen Körpers zugewandt. Die vorstehend beschriebene Vorrichtung läßt sich einfach und kostengünstig herstellen.

Die Spule mit dem quaderförmigen Kern ist vorzugsweise in der Stirnseite einer drehbaren Welle aus nichtmagnetischem Material befestigt, während die auf dem Scheibenkern aufgewickelten Spulen am Boden einer Bohrung eines Gehäuses angeordnet sind, in die die Welle hineinragt. Die Spulen sind hierbei gegen äußere Einwirkungen geschützt.

Bei einer bevorzugten Ausführungsform ist die drehbar angeordnete Spule an die Sekundärwicklung eines Drehtransformators angeschlossen, dessen Primärwicklung in dem das feststehende Geberteil tragenden Gehäuse befestigt ist. Die Energiezufuhr für die Spule des drehbaren Geberteils erfolgt kontaktlos. Damit werden Schleifkontakte vermieden.

Falls sich der Drehkörper nur innerhalb eines begrenzten Drehwinkelbereiches jeweils abwechselnd in der einen oder anderen Richtung dreht, kann auch eine Leitungszuführung zu der Spule des drehbaren Geberteils über flexible Leitungen vorgesehen sein. Vorzugsweise sind die beiden Spulen des feststehenden Geberteils für die Erzeugung je einer Periode einer sinusförmigen und einer cosinusförmigen Amplitude der Ausgangsspannung in Abhängigkeit von der Drehstellung des drehbaren Geberteils bei einer vollen Umdrehung ausgebildet. Die Spulen des feststehenden Geberteils können aus einer Reihe von Windungen bestehen, die eng beieinander aufgewickelt sind, um die Querschnittsabmessungen möglichst klein und kompakt zu halten. Das Wechselfeld der drehbaren Spule erzeugt sinus- beziehungsweise cosinusförmige Induktionen in den beiden Spulen der feststehenden Geberteile. Es ist auch möglich, die beiden Spulen des feststehenden Geberteils je Umdrehung des drehbaren Geberteils für die Erzeugung einer dreieckförmigen Spannung auszubilden, wobei beide Spannungen je um eine Viertel-Periode gegeneinander phasenverschoben sind.

Eine besonders günstige Ausführungsform besteht darin, daß die Ausgangsspannungen der beiden Spulen des feststehenden Geberteils je über einen von der Wechselstromquelle gesteuerten phasenselektiven Gleichrichter an einen Verstärker angeschlossen sind, der die Schaltungskomponenten aufweist, mit denen Kompensationsgrößen veränderbar sind. Mit dieser Anordnung werden zwei Gleichspannungen erzeugt, deren werte jeweils dem Sinus- beziehungsweise Cosinus der Winkelposition des drehbaren Geberteils entsprechen. Mechanische Toleranzen der Zentrierpositionen der Spulen in den beiden Geberteilen und der Einfluß des Drehtransformators auf die Ausgangssignale der feststehenden Spulen können jeweils durch eine einstellbare Überlagerungsspannung ausgeglichen werden. Unterschiede in den Amplituden der sinus- und cosinusförmigen Spannungen werden durch unterschiedliche Verstärkungen der beiden Signale ausgeglichen. Eine zweckmäßige Ausführungsform besteht darin, daß ein Oszillator die Primärwicklung des Drehtransformators speist, an dessen Primärwicklung eine vom Oszillator gesteuerte phasenbezogene Abtastsignalerzeugung angeschlossen ist, und den je eine Steuerelktrode eines FET (Feld-Effekt-Transistor) Schalters angeschlossen ist, der in Reihe mit einer Spule des feststehenden Geberteils und Widerständen an die Eingänge eines Operations-Verstärkers angeschlossen ist, dessen veränderbarer Verstärkungsgrad und überlagerbarer Spannungsteil zur Einstellung der Kompensationswerte dient. Dieser Anordnung können für die verschiedenen Fehlereinflüsse, die mechanischen Toleranzen der Zentrierung der Sender- und Empfängerspulen, der Einfluß des Drehtransformators und der sonstigen Asymmetrien, Korrekturmaßnahmen durchgeführt werden, so daß die Ausgangsspannungen der Operationsverstärker je einen exakten sinus- beziehungsweise cosinusförmigen Verlauf in Abhängigkeit von der Winkelposition des drehbaren Geberteils haben, beziehungsweise ist jeder Winkelposition ein bestimmter Wert einer Gleichspannung zugeordnet, die sich entsprechend der Winkellage sinus- beziehungsweise cosinusförmig ändert.

Um den Winkelversatz der beiden Spulen des feststehenden Geberteils zu kompensieren, wird vorzugsweise eine dem Tangens des Versatzwinkels proportional Spannung der einen Ausgangsspannung der anderen Ausgangsspannung vorzeichenrichtig überlagert.

Vor der Einstellung der Kompensationswerte werden die Ausgangsspannungen der Spulen des feststehenden Geberteils während einer vollen Umdrehung des drehbaren Geberteils gemessen und unter Bezug auf die vorgesehene Funtkion der Winkelversatz ermittelt. Die Kompensationswerte der Schaltungskomponenten werden dann so eingestellt, daß zwischen den sinus-und cosinusförmigen Ausgangssignalen keine Phasen-Differenz mehr auftritt.

Eine andere zweckmäßige Maßnahme zur Bestimmung der Kompensationswerte besteht darin, die Ausgangsspannungen der Spulen in vorgebbaren Winkelpositionen zu messen. Danach werden aus diesen Meßwerten die Kompensationswerte der Schaltungs-Komponenten so eingestellt, daß zwischen den sinus-und cosinusförmigen Ausgangssignalen keine Phasen-Differenz mehr auftritt.

Die Erfindung wird im folgenden anhand von in einer Zeichnung dargestellten Ausführungbeispielen näher beschrieben, aus denen sich weitere Einzelheiten, Merkmale und Vorteile ergeben.

Es zeigen:

Figur 1 einen Winkelsensor schematisch im Längsschnitt,

Figur 2 eine perspektivische Ansicht eines drehbaren und eines feststehenden Geberteils des in Figur 1 dargestellten Winkelsensors,

Figur 3a bis Figur 3bein Diagram des Verlaufs eines Signales des in Figur 1 und 2 dargestellten Winkelsensors,

Figur 4 ein Schaltbild der Spulen eines Winkelsensors,

Figur 5 ein Blockschaltbild einer Einrichtung zur Signalgleichrichtung und zur Kompensation der durch Asymmetrien und Ungenauigkeiten in der Anordnung der Geberteile verusachten Abweichungen der Ausgangssignale des feststehenden Geberteils von einer vorgebbaren Funktion,

Figur 6 eine Darstellung zweier winkelversetzter Spulen des festehenden Geberteils,

Figur 7 ein Schaltbild einer Anordnung zur Kompensation des auf den Winkelversatz zurückgehenden Fehlers,

Figur 8 ein Schaltbild einer Signalaufbereitung eineschließlich Generator und Einrichtung zur Kompensation der von Unsymmetrien und Ungenauigkeiten in der Anordnung der Geberteile verursachten Abweichungen der Ausgangssignale des feststehenden Geberteils von einer vorgebbaren Funktion.

Ein elektromagnetischer Winkelsensor (1) enthält eine drehbar gelagerte Welle (2), deren eine Stirnseite (3) eine Aussparung (4) aufweist, in der ein drehbar angeordnetes Geberteil (5) angeordnet ist. Die Welle (2) ragt in eine Bohrung (6) eines Gehäuses. Am Boden der Bohrung (6) ist im Gehäuse (7) eine weitere Aussparung (8) vorgesehen, in der sich ein feststehendes Geberteil (9) befindet.

Das drehbare Geberteil (5) enthält eine Spule (10), die spiralförmig auf einen quaderförmigen Kern (11) eines hochpermeablen Materials, vorzugsweise Ferrit, aufgewickelt ist. Die Breitseite des Quaders ist dem feststehenden Geberteil (9) zugewandt, das zwei Spulen (12, 13) enthält, die spiralförmig auf einen zylindrischen Scheibenkern (14) aus hochpermeablem Material, z. B. Ferrit, aufgewickelt sind. Die beiden Spulen (12, 13) sind um 90° gegeneinander versetzt. Sie sind über die Stirnseiten (14) des Scheibenkerns gewickelt. Die eine kreisförmige Stirnseite des Scheibenkers (14) ist dem drehbaren Geberteil zugewandt. Die Spulen (10, 12 und 13) erstrecken sich beiderseits einer Drehachse (53) des Winkelsensors (1) mit quer zu der Drehachse (53) verlaufendenen Längsachsen.

Die beiden Anschlüsse der Spule (10) sind mit der Sekundärwicklung (15) eines Drehtransformators verbunden, dessen Primärwicklung (16) in einer Aussparung des Gehäuses (7) angeordnet ist.

Über den Drehtransformator wird die Spule (10) mit einer Wechselspannung gespeist, die in den Spulen (12 und 13) Spannungen induziert, deren Größen von der Wickelposition des drehbaren Geberteils (5) gegenüber zu den Spulen 12, 13 abhängen, bei exakter Ausrichtung der Spulen (10 und 12, 13) aufeinander und bei gleicher Ausbildung der beiden Spulen (12 und 13) sowie bei einer Spannung an der Spule 10, die eine konstante Amplitude hat, treten an den Spulen (12 und 13) jeweils im günstigsten Falle eine sinusförmige und eine cosinusförmige Spannung in Abhängigkeit von der mit $\alpha$ bezeichneten Winkelposition der Welle auf.

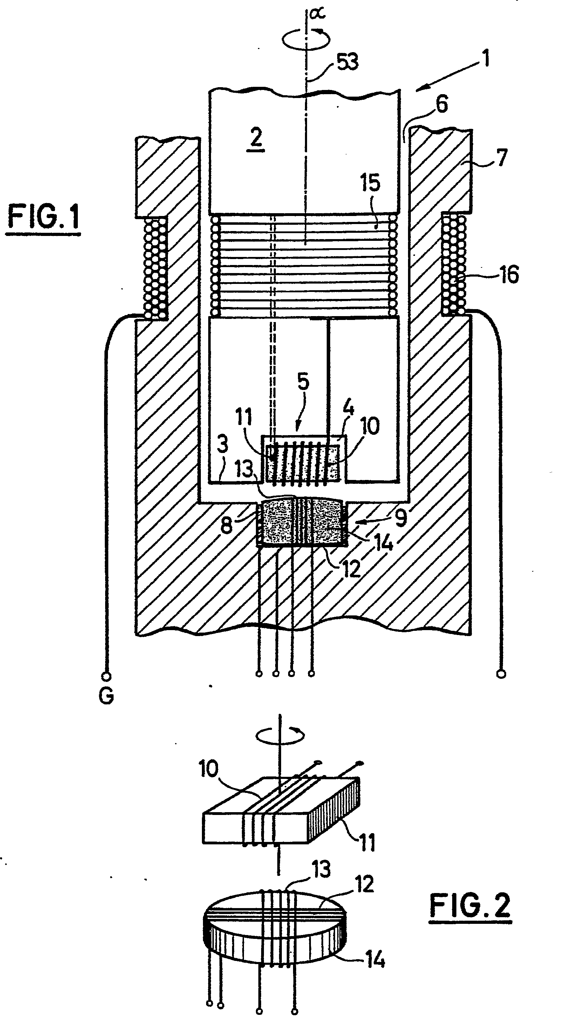

Der elektromagnetische Winkelsensor (1) setzt daher die mit $\alpha$ in Fig. 1 und 2 bezeichnete Winkelposition einer Achsdrehung in ein elektrisches Signal um. Die Spule (10) wird als Sendespule mit einem Wechselstrom konstanter Amplitude versorgt und erzeugt ein elektromagnetisches Feld. Die Feldlinienrichtung wird durch die Drehung der Welle (2) verändert. Ein Teil der Feldlinien dieses Felds dringt in die feststehenden Spulen (12, 13) als Empfängerspulen ein und induziet in jeder Wicklung eine vom Winkel abhängige Signalwechselspannung.

Werden beispielsweise die 2 Wicklungen (12 und 13) um 90° versetzt angeordnet, so sind auch die Signalspannungen über den Winkel $\alpha$ um 90° phasenverschoben. Der Funktionsverlauf (Kurvenform) der Signalspannung jeder einzelnen Wicklung wird durch den Feldlinienverlauf und damit durch die Geometrie und die Permeabilität der Senderspule und der Empfängerspulen bestimmt. Zweckmäßige Kurvenformen sind beispielsweise Sinus- oder Dreieckfunktionen.

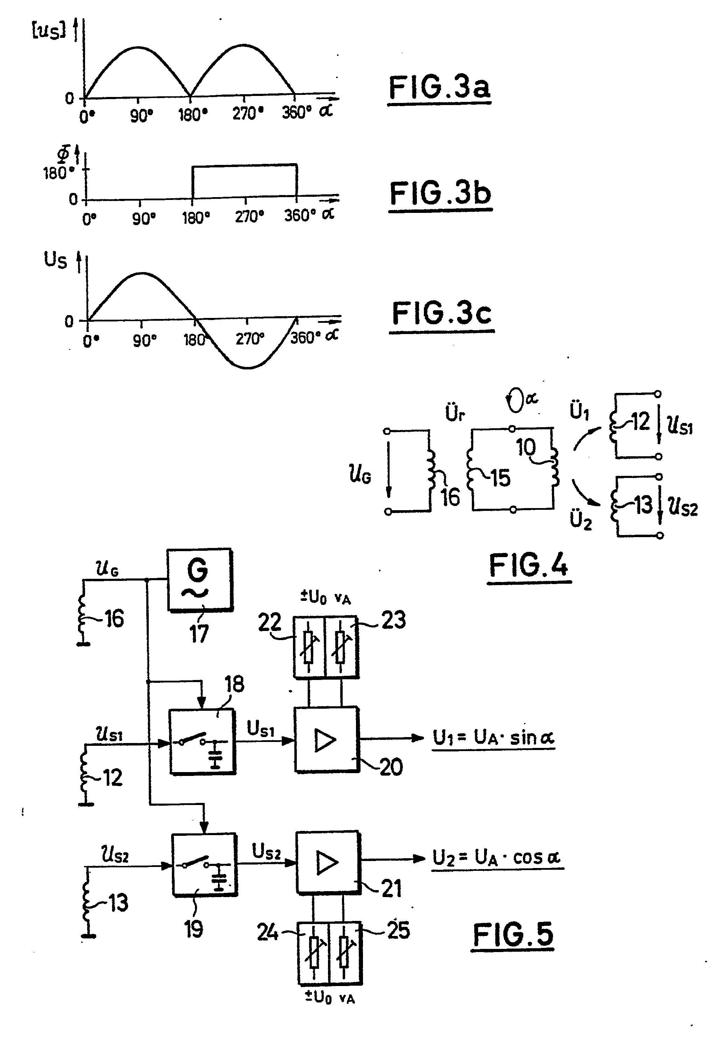

Die Figur 3a zeigt den Verlauf der Ausgangsspannung der Spule (12) in Abhängigkeit vom Winkel $\alpha$. In Figur 3b ist die Phase $\Phi$ der Ausgangsspannung, bezogen auf die Phase der die Spule 10 speisenden Generatorspannung in Abhängigkeit vom Winkel $\alpha$ dargestellt. Die Figur 3c zeigt den Verlauf der gleichgerichteten Signalspannung der Spule 12 in Abhängigkeit vom Winkel $\alpha$.

Die zweite, um 90° versetzte Wicklung erzeugt eine Cosinus-Signalfunktion (Kreuzspule). Neben dem Sinus-Cosinus-System ist auch eine Empfängerspule mit drei, um je 120° versetzten Windungen als 3-Phasen-System möglich.

Jedes beliebige System überträgt die Signale zu einem Empfänger, der aus den Informationen den Positionswinkel des Rotors über die eindeutige Definitionen der Signalfunktionen ableitet. Die Speisung der Senderspule erfolgt berührungslos über den Drehtransformator mit der Primärwicklung (16) und der Sekundärwicklung (15), die so konzentisch angeordnet sind, daß die Energieübertragung unabhängig von Winkel $\alpha$ ist.

Ein elektrisches Ersatzschaltbild einer Primärwicklung (16), einer Sekundärwicklung (15) und der Spulen (10, 12, 13) ist für ein Zwei-Phasensystem in Figur 4 dargestellt. Die komplexe Signalspannung $\vartheta_{S1}$ der Spule 12 ist proportional zu einer Generatorspannung $\vartheta_G$ und zum Sinus des Winkels $\alpha$, eine komplexe Signalspannung $\vartheta_{S2}$, ebenso $\vartheta_G$ und zum Cosinus des Winkels $\alpha$.

Es gelten die Beziehungen: $\vartheta_{S1} = a \times \vartheta_G \times \sin \alpha$, und $\vartheta_{S2} = a \times \vartheta_G \times \text{Cosinus } \alpha$, wobei a die Gesamtübertragung von Drehtransformator und feststehenden sowie drehbaren Spulen und $\vartheta_G$ die komplexe Generatorspannung bezeichnen.

Aufgrund der vorhandenen mechanischen Toleranzen der Zentrierposition der Spulen (10, 12 und 13) der Kerne (11 und 14) und des Einflusses des Drehtransformators weichen die tatsächlich an den Spulen (12 und 13) auftretenden Ausgangsspannungen von der in Figur 3a dargestellten Form ab, da diese Einflüsse Meßfehler bezüglich der Definition des Winkels $\alpha$ bewirken. Die auf Asymmetrien beruhenden Fehlerspannungen lassen sich in einer den Ausgängen der Spulen (12, 13) nachgeschalteten Anordnung kompensieren. Eine solche Anordnung ist in Figur 5 dargestellt.

Ein Generator (17) erzeugt eine sinusförmige Wechselspannung, die die Primärwicklung (16) speist. Die Spulen (12 und 13) des feststehenden Geberteils (9) sind je mit einem phasenselektiven Gleichrichter (18, 19) verbunden. Die Gleichricher (18, 19) werden von einer von der Wechselspannung des Generators (17) abgeleiteten Tastspannung betätigt. Den phasenselektiven Gleichrichtern (18, 19) sind jeweils Verstärker (20, 21) nachgeschaltet, die je Schaltungskomponenten (22, 23 und 24, 25) zur Kompensation der durch Asymmetrien in der mechanischen Anordnung der Spulen (10, 12, 13) und durch Ungenauigkeiten verursachten Abweichungen der Ausgangssignale der Spulen (12, 13) von der in Figur 3a dargestellten Form aufweisen. Durch die phasenselektive Gleichrichtung und die Verstärkung werden je an den Ausgängen der Verstärker (20, 21) Gleichspannungen nach folgenden Beziehungen erzeugt: $U_1 = U_A$ x sin $\alpha$ , $U_2 = U_A$ x cos $\alpha$ , wobei mit $U_1$ und $U_2$ die Ausgangsgleichspannungen und mit $U_A$ die Amplitude bezeichnet sind. Mit den Schaltungskomponenten (22, 24) werden durch einfache Überlagerung variabler Spannungen $\pm U_O$ die auf Asymmetrien beruhenden Meßfehler beseitigt.

Sind unterschiedliche Amplitudenwerte zwischen $\vartheta_{S1}$ und $\vartheta_{S2}$ mit den Schaltungskomponenten (23, 25) vorhanden, können sie durch eine variable Verstärkung $v_A$ mit den Schaltungskomponenten (23, 25) ausgeglichen werden. Die kompensierten Gleichspannungssignale $U_1$ und $U_2$ stehen dann für die exakte Winkelinformation zur Verfügung. Die Einstellung der Schaltungskomponenten 22 bis 25, das heißt der die Kompensationsspannungen oder Verstärkungsgrade beeinflussenden Widerstände, erfolgt anhand einer Messung der unkompensierten Ausgangsspannungen, währen einer Umdrehung der Spule (10) um 360°. Anhand der tatsächlichen Größen der Ausgangsspannungen im Vergleich mit den Größen bei 90° und 270° beziehungsweise bei 180° und 360° können die Einstellwerte für die Erzeugung von Überlagerungs-Spannungen gewonnen werden, die die Kurven im Sinne der Lage der Maxima gemäß Figur 3 verschieben. Aus den Unterschieden zwischen den Amplituden der Spannungen $U_1$ und $U_2$ kann der Einstellwert für die Veränderung des Verstärkungsgrads zur Erzielung zweier Spannungen mit gleichen Amplituden erhalten werden.

Wird die Winkelfehlerfunktion der Ausgangssignale der Spulen (12 und 13) mit $\Delta\alpha$ bezeichnet, dann gilt folgender durch eine Fouriergleichung angebbarer Zusammenhang zwischen dem Winkelfehler in Abhängigkeit vom Winkel: $\Delta\alpha$ ($\alpha$) = $\alpha_0 + \alpha_1$ x sin $\alpha$ + $\alpha_2$ x cos $\alpha$ + $\alpha_3$ x sin $(2\alpha)$ +$\alpha_4$ x cos $(2\alpha)$+.... wobei im Sinus-Cosinus-System den Koeffizienten folgende Fehler entsprechen:

$\alpha_0$: Winkelnullpunktfehler (mechanische Justierung der Drehachse)

$\alpha_1$: Asymmetrie der Cosinusfunktion $U_{S2}$ (Kompensation mit $\pm U_0$)

$\alpha_2$: Asymmetrie der Sinusfunktion $U_{S1}$ (Kompensation mit $\pm U_0$)

$\alpha_3$: Amplitudenunterschiede zwischen $U_1$ und $U_2$ (Kompensation mit $v_A$)

mit $\alpha$ : tatsächlicher Drehwinkel

und $\Delta\alpha$: Unterschied zwischen gemessenem Drehwinkel und dem tatsächlichen Drehwinkel

Die einzelnen Koeffizienten $\alpha_i$ lassen sich aus der Winkelfehlerfunktion $\Delta\alpha$ ( $\alpha$ ) und daraus die Kompensationsgrößen $\pm U_0$ und $v_A$ für jeden Kanal berechnen. Die Koeffizienten höherer Ordnung $\alpha_4...\alpha_\infty$ werden durch nicht ideale Sinusförmigkeiten und Nichtlinearitäten im Übertragungsweg verursacht und sind durch die Güte der Entwicklung beeinflußbar.

Durch direkte Messung der Extremwerte der einzelnen Signalkomponenten $U_1$ und $U_2$ lassen sich die Kompensationsparameter $\pm U_0$ und $v_A$ unmittelbar auch ohne Drehwinkelvorgabe bestimmen.

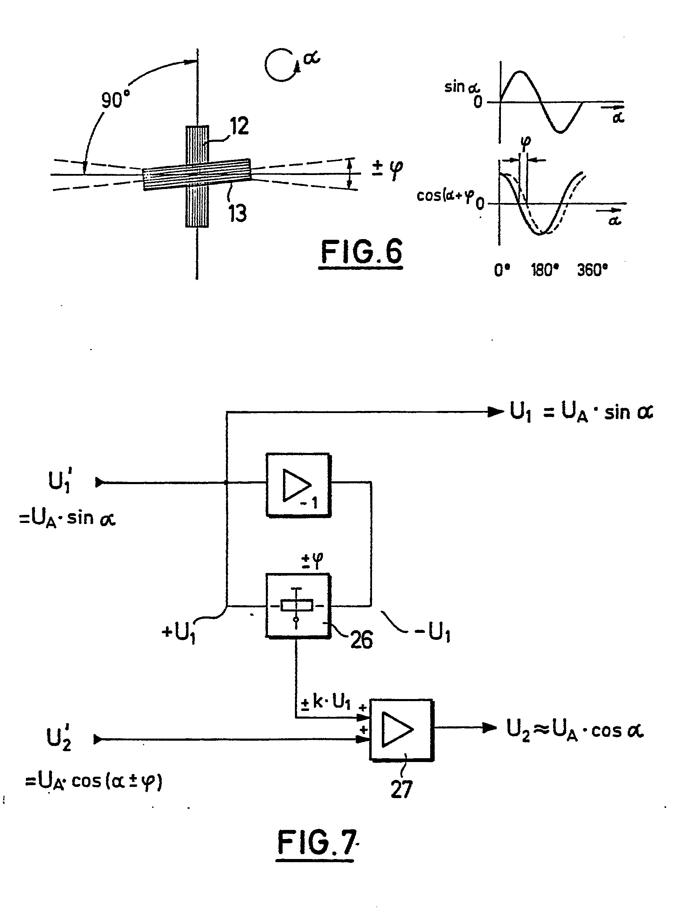

Der Koeffizient $\alpha_4$ entspricht dem Fehlereinfluß des Winkelversatzes, der aus Figur 6 ersichtlich ist. Der Winkelversatz von $\phi$ der Spule (13) ruft einen Phasenfehler hervor, der die Funktion cos ($\alpha + \phi$) hervorruft, das heißt die Cosinusfunktion ist um den Phasenwinkel $\phi$ verschoben. Für dem in Normalfall kleinen Winkelversatz $/\phi/< 5°$ wird der Fehler durch die in Figur 7 dargestellte Schaltungsanordnung kompensiert.

Die Ausgangsspannung $U_1' = U_A$ x sin$\alpha$ des einen Kanals, z. B. des Sinuskanals, wird invertiert und nicht invertiert einem einstellbaren Spannungsteiler (26) zugeführt, dessen Abgriff an einen Eingang eines summierenden Verstärkers (27) gelegt ist, dessen anderer Eingang von der Spannung $U_2' = U_A$ x cos ($\alpha \pm \phi$) beaufschlagt ist. Der Spannungsteiler (26) erzeugt eine Ausgangsspannung $\pm k$ x $U_1$ die eine Ausgangsspannung $U_2 \approx U_A$ x cos$\alpha$ am Verstärker (27) hervorruft, wobei k = $\pm$ tan $\phi$ sein muß.

Es gilt für kleine Winkel$\phi$ die Näherungsgleichung

$$\alpha \approx arc\ tan\left(\frac{sin\ \alpha}{cos(\alpha \pm \phi) + k \cdot sin\ \alpha}\right)$$

(Gl. 1)

Je nach der Richtung des Winkels $\phi$ muß auch das Einwirken des Sinuskanals phasenrichtig erfolgen $(-U_1 + U_1)$. Für eine optimale Kompensation muß der Koppelfaktor k = dem Tangens des Winkelversatzes $\phi$ eingestellt werden. Bedingt durch die Näherungsformel (Gl. 1) kann mit dieser Schaltung keine vollständige Kompensation durchgeführt werden. Der Restfehler beträgt beispielsweise maximal 0,12° bei $\phi$ = 5° und 0,03° bei $\phi$ = 2,5°. Für $\phi$ < 2,5° wird der Restwinkelfehler verschwindend gering.

Im übrigen wirkt sich der Winkelversatz in der allgemeinen Winkelfehlergleichung $\Delta\alpha$ wie folgt aus:

$\Delta\alpha \approx \alpha_0 \pm \alpha_4 x \cos(2\alpha)$

mit $\alpha_0 = \pm \phi/2$

und $\alpha_4 = \mp \phi/2$.

Damit ist auch der Koeffizient $\alpha_4$ über den Koppelfaktor k manipulierbar.

Durch die Referenzausrichtung des Winkelsensors (1) in bestimmte Winkelpositionen können die Kompensationskoeffizienten ebenfalls festgestellt werden.

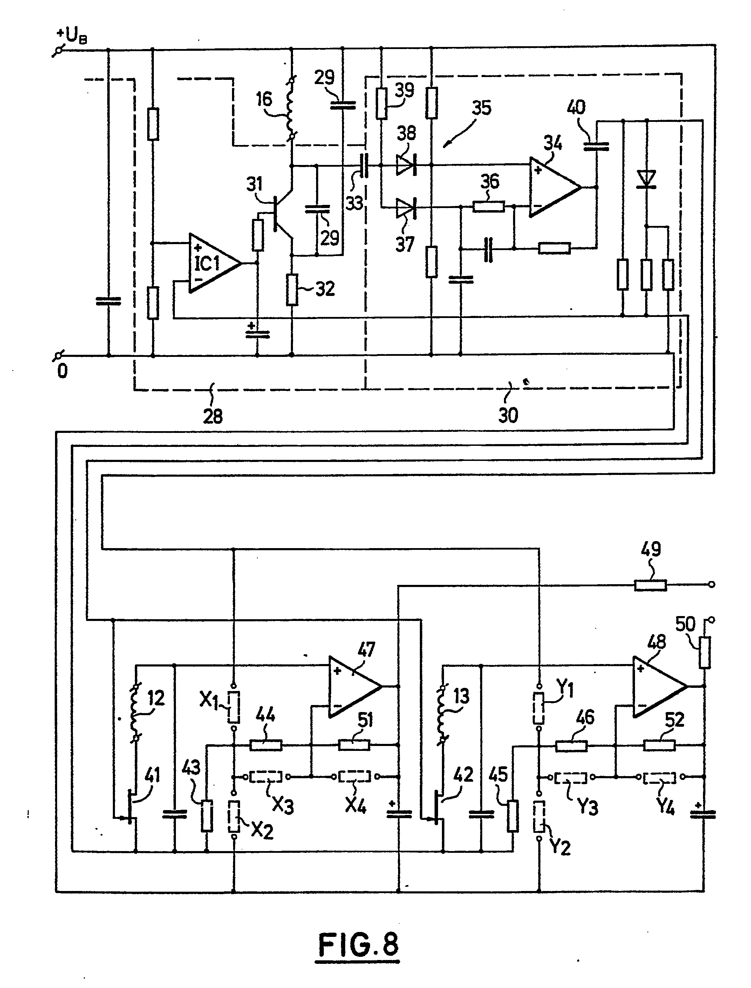

Die in Figur 8 dargestellte Schaltung enthält einen Oszillator (28) der mittels zweier Kondensatoren (29) im Zusammenwirken mit der Primärwicklung (16) eine Schwingung erzeugt. Der Oszillator (28) wird von einer Betriebsgleichspannung gespeist, zwischen deren Pole die Primärwicklung (16) in Reihe mit der Kollektor-Emitter-Strecke eines Transistors (31) und eines Widerstands (32) angeordnet ist. Die Kondensatoren (29) sind zu der Reihenschaltung der Primärwicklung (16) parallel geschaltet. Der kapazitive Spannungsteilerabgriff ist dem Emitter des Transistors (31) mitgekoppelt. An den Kollektor des Transistors (31) ist eine Abtastsignalerzeugung (30) über ein Koppelkondensator (33) angeschlossen.

Die phasenbezogene Abtastsignalerzeugung (30) enthält einen Operationsverstärker (34), dessen nicht invertierender Eingang an den Abgriff eines Spannungsteilers (35) gelegt ist. Der invertierende Eingang des Operationsverstärkers (34) ist über einen Widerstand (36) und eine Diode (37) mit dem Koppelkondensator (33) verbunden, der über eine weitere Diode (38) auch mit dem nicht invertierenden Eingang eines Operationsverstärkers (34) verbunden ist. Die Anoden der Dioden (37, 38) sind über einen Widerstand (39) an den positiven Pol der Betriebsspannung angeschlossen.

Der Operatiosverstärker (34), der die Abtastpulse liefert, ist über einen Koppelkondensator (40) mit den Steuerelektroden eines ersten und eines zweiten FET-Schalters (41, 42) verbunden. Die Drain-Source-Strecken der FET-Schalter (41, 42) sind jeweils in Reihe mit den Spulen (12, 13) und zwei Widerständen (43, 44, 51 bzw. 45, 46, 52) zwischen den beiden Eingängen von Operationsverstärkern (47 bzw. 48) angeordnet, an deren Ausgängen jeweils über Schutzwiderstände (49, 50) die Spannungen $U_1$ und $U_2$ verfügbar sind. Ein Spannungsteiler mit zwei Widerständen X1 und X2 wird bedarfsweise zur Kompensation von Fehlerspannungen mit seinem Abgriff an den Widerstand (44) angeschlossen, zu dem auch bedarfsweise ein Widerstand X3 parallelgeschaltet werden kann. Auch zum Widerstand (51) wird bedarfsweise ein Widerstand X4 parallelgeschaltet. In entsprechender Weise wird ein Spannungsteiler mit den Widerständen Y1 und Y2 bedarfsweise mit seinem Abgriff an den Widerstand (46) angeschlossen. Zu den Widerständen (46 und 52) werden bedarfsweise Widerstände Y3 und Y4 parallel geschaltet. Die Größen der Widerstände X1 bis X4 und Y1 bis Y4 werden entsprechend den zu korrigierenden Asymmetrien und Ungenauigkeiten eingestellt. Hierbei sind die Widerstände X3 und X4 beziehungsweise Y3 und Y4 vorwiegend zur Anpassung des Verstärkungsgrads vorgesehen, um Ausgangsspannungen $U_1$ und $U_2$ mit gleichen Amplituden zu erzeugen. durch entsprechende Auswahl der Werte der Widerstände X1, X2 beziehungsweise Y1, Y2 lassen sich Asymmetrien kompensieren.

Die in Figur 5, 7 und 8 dargestellten Schaltungen sind vorzugsweise miniaturisiert im Gehäuse 7 angeordnet. Der Drehtransformator und die spulen (10, 12 und 13) sind zweckmäßigerweise von einer Abschirmung gegen magnetische und elektromagnetische Felder umgeben, so daß externe Störungen ausgeschaltet werden.

Der oben beschriebene Winkelgeber kann im Automobilbereich, z. B. zur Messung der Gaspedalstellung, der Drosselklappenstellung, der Lenkradposition und eines Niveaus, eingesetzt werden. Im Marinebereich ist ebenfalls eine Andwendung möglich. Der Winkelgeber kann in Windmeßanlagen, für die Ruderstellungsposition, für Z-Getriebepositionen, und für die Festellung der ausgefahrenen Ankerlänge genutzt werden. Im Luftfahrtbereich ist ganz allgemein eine Anwendung für Winkel-Position, und Umdrehungsmessungen möglich. Die gleichen Anwendungen sind im Industriebereich möglich.

## Patentansprüche

1. Winkelsensor (1) mit einem drehbar angeordneten Geberteil (5) und einem feststehenden Geberteil (9), wobei das drehbare Geberteil (5) eine an eine Wechselstromquelle anschließbare Spule (10) aufweist, die auf einem Träger spiralig aufgewickelt ist und sich beiderseits einer Drehachse (53) mit quer zu dieser verlaufender Längsachse erstreckt, und das feststehende Geberteil (9) mindestens einen im Abstand der Spule (10) gegenüberstehenden Sensor für elektromagnetische Felder enthält, dadurch gekennzeichnet, daß das feststehende Geberteil sich beiderseits der Drehachse (53) quer zu dieser erstreckt und der Sensor ausgangsseitig mit einer Schaltung verbunden ist, die Schaltungs-Komponenten (22, 23, 24, 25, 26) zur Kompensation oder Teilkompensation der durch Asymmetrien bzw. Ungenauigkeiten in der Anordnung der Geberteile (5, 9) verursachten Abweichungen des oder der Ausgangssignale(s) des feststehenden Geberteils (9) von einem festgelegten Zusammenhang zwischen der Winkelposition des drehbaren Geberteils (5) und dem oder den Ausgangssignal(en) des feststehenden Geberteils (9) aufweist.

2. Winkelsensor nach Anspruch 1, dadurch gekennzeichnet, daß die drehbar angeordnete Spule (10) an die Sekundärwicklung (15) eines Drehtransformators angeschlossen ist, dessen Primärwicklung (16) in dem das feststehende Geberteil (9) tragenden Gehäuse befestigt ist.

3. Winkelsensor nach Anspruch 1, dadurch gekennzeichnet, daß die Komponenten solche zur Kompensation der Asymmetrien und/ oder der Signalamplituden und/ oder des Spulenwinkelversatzes sind.

4. Winkelsensor nach Anspruch 1, dadurch gekennzeichnet, daß das feststehende Geberteil (9) zwei um 90° mit ihren Längsachsen gegeneinander versetzte, spiralig aufgewickelte Spulen (12, 13) aufweist, deren Ausgänge je an die Schaltung angeschlossen sind.

5. Winkelsensor nach Anspruch 1, dadurch gekennzeichnet, daß mindestens die Spule (10) des drehbaren Geberteils (5) auf einen ferromagnetischen Kern (11) aufgewickelt ist, in dessen äußerem Feld das feststehende Geberteil (9) angeordnet ist.

6. Winkelsensor, nach einem der vorhergehenden Ansprüche, dadurch gekennzeichnet, daß der Kern (11) der Spule (10) des drehbaren Geberteils (5) quaderförmig ist und daß die Spulen (12, 13) des feststehenden Geberteils (9) auf einem zylindrischen Scheibenkern (14) aus einem hochpermeablen Werkstoff angeordnet sind.

7. Winkelsensor nach einem der vorhergehenden Ansprüche, dadurch gekennzeichnet, daß die Spule (10) mit dem quaderförmigen Kern (11) vorzugsweise in der Stirnseite einer drehbaren Welle aus nichtmagnetischem Material befestigt ist, während die auf dem Scheibenkern (14) aufgewickelten Spulen (12, 13) am Boden einer Bohrung (6) eines Gehäuses (7) angeordnet sind, in die die Welle (2) hineinragt

8. Winkelsensor nach einem der Ansprüche 1 oder 3 bis 7, dadurch gekennzeichnet, daß die Spule (10) des drehbaren Geberteils über flexible Leitungen an die Wechselstromquelle angeschlossen ist.

9. Winkelsensor nach einem der vorhergehenden Ansprüche, dadurch gekennzeichnet, daß die beiden Spulen (12, 13) des feststehenden Geberteils (9) für die Erzeugung je einer für die Periode einer sinusförmigen und einer cosinusförmigen Ausgangsspannung in Abhängigkeit von der Drehstellung des drehbaren Geberteils (5) bei einer vollen Umdrehung ausgebildet sind.

10. Winkelsensor nach einem der Ansprüche 1 bis 8, dadurch gekennzeichnet, daß die beiden Spulen (12, 13) des feststehenden Geberteils (9) je Umdrehung des drehbaren Geberteils (5) für die Erzeugung jeweils einer Periode einer dreieckförmigen Spannung ausgebildet sind, wobei beide Spannungen je um eine Viertel-Periode gegeneinander phasenverschoben sind.

11. Winkelsensor nach einem der Ansprüche 1 bis 9, dadurch gekennzeichnet, daß die Ausgangsspannungen der beiden Spulen (12, 13) des feststehenden Geberteils (9) je über einen von der Wechselstromquelle gesteuerten phasenselektierten Gleichrichter (18, 19) an einen Verstärker (20, 21) angeschlossen sind, der die Schaltungskomponenten (22, 23; 24, 25) aufweist, mit denen Kompensations-Größen veränderbar sind.

12. Winkelsensor nach einem der Ansprüche 1 oder 3 bis 11, dadurch gekennzeichnet, daß ein Oszillator die Primärwicklung (16) des Drehtransformators speist, an dessen Primärwicklung (16) eine vom Oszillator (28) gesteuerte phasenbezogene Abtastsignalerzeugung (30) angeschlossen ist, an dem je eine Steuerelektrode eines FET-Schalters (41, 42) angeschlossen ist, der in Reihe mit einer Spule (12, 13) des feststehenden Geberteils (9) und Widerständen (43, 44; 45, 46, 51, 52) an die Eingänge eines Operationsverstärkers (47, 48) angeschlossen ist, dessen veränderbarer Verstärkungsgrad und überlagerbarer Spannungsteil zur Einstellung der Kompensationswerte dient.

13. Winkelsensor nach einem der vorhergehenden Ansprüche, dadurch gekennzeichnet, daß die Schaltung zur Kompensation der durch Asymmetrien bzw. Ungenauigkeiten in der Anordnung der Geberteile (5, 9) verursachten Abweichungen des oder der Ausgangssignale des feststehenden Geberteils (9) an oder nahe an den Geberteilen (5, 9) im gleichen Gehäuse (7) angeordnet ist.

14. Winkelsensor nach einem der vorhergehenden Ansprüche, dadurch gekennzeichnet, daß zumindest die Geberteile (5, 9) und die Schaltung von einer Abschirmung gegen elektromagnetische Felder umgeben sind.

15. Winkelsensor nach einem der vorhergehenden Ansprüche, dadurch gekennzeichnet, daß der Winkelversatz zwischen den beiden Spulen (12, 13) des feststehenden Geberteils (9) durch die vorzeichenrichtige Überlagerung eines dem Tangens des Versatzwinkels proportionalen Werts der einen Ausgangsspannung auf die andere Ausgangsspannung kompensierbar ist.

16. Verfahren zur Einstellung eines Winkelsensors nach einem der vorhergehenden Ansprüche, dadurch gekennzeichnet, daß zuerst die Extremwerte der Ausgangsspannung mindestens des einen Sensorkanals bei einer vollen Umdrehung des drehbaren Teils gemessen werden und daß danach die Einstellwerte der Schaltungskomponenten (22, 23, 24, 25) so angepaßt werden, daß die aus den Extremwerten berechnete Kompensation erreicht wird.

17. Verfahren zur Einstellung eines Winkelsensors nach einem der Ansprüche 1 bis 15, dadurch gekennzeichnet, daß die Ausgangsspannungen der Sensorkanäle zuerst bei vorgegebenen Winkelpositionen gemessen werden, daß danach aus den Meßwerten die Fehler-Koeffizienten ($\alpha_0$, $\alpha_1$, $\alpha_2$, $\alpha_3$ ..... ) von Fouriergleichungen der Art: $\Delta\alpha\,(\alpha) = \alpha_0 + \alpha_1 \times \sin\alpha + \alpha_2 \cdot \cos\alpha_2 + \alpha_3 \cdot \sin(2\alpha) + ....$ , bestimmt werden, worin $\alpha$ die Winkelstellung, $\alpha_0$ der Winkelnullpunktfehler, $\alpha_1$ die Asymmetrie einer Cosinusfunktion, $\alpha_2$ die Asymmetrie einer Sinusfunktion und $\alpha_3$ das Amplitudenverhältnis der beiden Ausgangsspannungen charakterisiert, und daß die Koeffizienten $\alpha_0$ zur Nullpunkt-Justierung der Drehachse und $\alpha_1$, $\alpha_2$, $\alpha_3$ zur Einstellung der Schaltungskomponenten (22, 23, 24, 25) verwendet werden.

**Revendications**

1. Capteur (1) ou détecteur d'angle comprenant une partie (5) de transmetteur disposée libre en rotation et une partie (8) fixe de transmetteur, capteur dont la partie (5) de transmetteur rotative présente une bobine (10) raccordable à une source de courant alternatif et qui est enroulée en spirale sur un support et s'étend des deux côtés d'un axe (53) de rotation en ayant son axe longitudinal orienté perpendiculairement à l'axe de rotation et dont la partie (9) de transmetteur fixe comporte au moins un capteur de champs électromagnétiques en regard de la bobine (10) et à quelque distance de cette bobine, capteur caractérisé en ce que la partie fixe de transmetteur s'étend des deux côtés de l'axe (53) de rotation perpendiculairement à celui-ci et en ce que le capteur est relié du côté sortie à un circuit qui présente des composants (22, 23, 24, 25, 26) destinés à la compensation ou à la compensation partielle des écarts du signal ou des signaux de sortie de la partie (9) fixe de transmetteur, signaux qui sont occasionnés par des asymétries ou des imprécisions dans la disposition des parties (5, 9) de transmetteur, la compensation étant réalisée à l'aide d'un rapport déterminé entre la position angulaire de la partie rotative (5) de transmetteur et le signal ou les signaux de sortie de la partie (9) fixe de transmetteur.

2. Capteur d'angle selon la revendication 1, caractérisé en ce que la bobine (10) disposée libre en rotation est reliée à l'enroulement secondaire (15) d'un transformateur rotatif, dont l'enroulement primaire (16) est fixé sur le boîtier portant la partie (9) de transmetteur fixe.

3. Capteur d'angle selon la revendication 1, caractérisé en ce que les composants sont des composants destinés à effectuer la compensation des asymétries et/ou des amplitudes de signaux et/ou du décalage angulaire des bobines.

4. Capteur d'angle selon la revendication 1, caractérisé en ce que la partie (9) de transmetteur fixe présente deux bobines (12, 13) enroulées en spirale dont les axes longitudinaux sont décalés de 90° et dont les sorties sont respectivement reliées au circuit.

5. Capteur d'angle selon la revendication 1, caractérisé en ce qu'au moins la bobine (10) de la partie (5) rotative du transmetteur est enroulée sur un noyau (11) ferromagnétique, dans le champ extérieur duquel est disposée la partie (9) fixe de transmetteur.

6. Capteur d'angle selon l'une des revendications qui précèdent, caractérisé en ce que le noyau (11) de la bobine (10) de la partie (5) rotative du transmetteur a une forme de parallélépipède et en ce que les bobines (12, 13) de la partie (9) fixe de transmetteur sont disposées sur un noyau (14) en forme de disque cylindrique en matière très perméable.

7. Capteur d'angle selon l'une des revendications qui précèdent, caractérisé en ce que la bobine (10) avec le noyau (11) parallélépipédique est, de préférence, fixée sur la face frontale d'un arbre rotatif en matière non magnétique, tandis que les bobines (12, 13) enroulées sur le noyau-disque (14) sont disposées à la base d'un alésage (6) d'un boîtier (7) dans lequel pénètre l'arbre (2).

8. Capteur d'angle selon l'une des revendications 1 ou 3 à 7, caractérisé en ce que la bobine (10) de la partie rotative de transmetteur est reliée par des conducteurs flexibles à la source de courant alternatif.

9. Capteur d'angle selon l'une des revendications qui précèdent, caractérisé en ce que les deux bobines (12, 13) de la partie (9) fixe de transmetteur sont constituées pour la production respective, dans le cas d'un tour complet de rotation, de la période d'une tension de sortie sinusoïdale et d'une tension de sortie cosinusoïdale en fonction de la position en rotation de la partie (5) tournante de transmetteur.

10. Capteur d'angle selon l'une des revendications 1 à 8, caractérisé en ce que les deux bobines (12, 13) de la partie (9) fixe de transmetteur sont constituées pour la production respective d'une période d'une tension triangulaire pour chaque rotation de la partie (5) tournante de transmetteur, les deux tensions étant déphasées entre elles d'un quart de période.

11. Capteur d'angle selon l'une des revendications 1 à 9, caractérisé en ce que les tensions de sortie des deux bobines (12, 13) de la partie (9) fixe de transmetteur sont respectivement connectées par l'intermédiaire d'un redresseur (18, 19) sélecteur de phases, commandé par la source de courant alternatif, à un amplificateur (20, 21) présentant les composants (22, 23; 24, 25) du circuit qui permettent de modifier les grandeurs de compensation.

12. Capteur d'angle selon l'une des revendications 1 ou 3 à 11, caractérisé en ce qu'un oscillateur alimente l'enroulement primaire (16) du transformateur rotatif, auquel enroulement primaire (16) est raccordé un organe (30) de production de signaux d'exploration en rapport avec les phases et commandé par l'oscillateur (28), auquel capteur sont reliées les électrodes de commande d'un interrupteur (41, 42) à transistor à effet de champ, qui est relié en série par une bobine (12, 13) de la partie (9) fixe de transmetteur et par des résistances (43, 44; 45, 46, 51, 52) aux entrées d'un amplificateur (47, 48) d'opérations dont le degré d'amplification est modifiable et dont la partie de tension superposable sert au réglage des valeurs de compensation.

13. Capteur d'angle selon l'une des revendications qui précèdent, caractérisé en ce que le circuit de compensation des écarts du ou des signaux de sortie de la partie (9) fixe, qui sont occasionnés par des asymétries ou des imprécisions dans la disposition des parties du transmetteur, est disposé sur ou à côté des parties (5, 9) du transmetteur et dans le même boîtier (7).

14. Capteur d'angle selon l'une des revendications qui précèdent, caractérisé en ce qu'au moins les parties (5, 9) du transmetteur et le circuit sont entourés d'une protection contre les champs électromagnétiques.

15. Capteur d'angle selon l'une des revendications qui précèdent, caractérisé en ce que le décalage angulaire entre les deux bobines (12, 13) de la partie (9) fixe de transmetteur peut être compensé par la superposition, affectée du signe correct, d'une valeur proportionnelle à la tangente de l'angle de décalage de l'une des tensions de sortie sur l'autre tension de sortie.

16. Procédé pour le réglage d'un capteur d'angle selon l'une des revendications qui précèdent, caractérisé en ce que les valeurs extrêmes de la tension de sortie d'au moins l'un des canaux du capteur sont d'abord mesurées pour une rotation complète de la partie tournante et en ce que les valeurs de réglage des composants (22, 23, 24, 25) du circuit sont ensuite adaptées de manière à obtenir la compensation calculée d'après les valeurs extrêmes.

17. Procédé pour le réglage d'un capteur d'angle selon l'une des revendications 1 à 15, caractérisé en ce que les tensions de sortie des canaux du capteur sont d'abord mesurées pour des positions angulaires imposées, et en ce que les coefficients d'erreur ($\alpha_0$, $\alpha_1$, $\alpha_2$, $\alpha_3$...) d'équations de Fourier du type

$$\Delta\alpha(\alpha) = \alpha_0 + \alpha_1 \cdot \sin\alpha + \alpha_2 \cdot \cos\alpha_2 + \alpha_3 \cdot \sin(2\alpha) +...$$

sont déterminés ensuite d'après les valeurs mesurées, équation dans laquelle $\alpha$ caractérise la position angulaire, $\alpha_0$ l'erreur sur le point zéro d'angle, $\alpha_1$ l'asymétrie d'une fonction de cosinus, $\alpha_2$ l'asymétrie d'une fonction de sinus et $\alpha_3$ le rapport entre les amplitudes des deux tensions de sortie, et en ce que les coefficients $\alpha_0$ d'ajustage du point zéro de l'axe de rotation et $\alpha_1$, $\alpha_1$, $\alpha_2$, $\alpha_3$ sont utilisés pour le réglage des composants (22, 23, 24, 25) du circuit.

## Claims

1. Phase-angle sensor (1) comprising a rotatably arranged transmitter section (5) and a stationary transmitter section (9), the rotatable transmitter section (5) having a coil (10), which can be connected to an alternating current source, is spirally wound on a carrier and extends on both sides of an axis of rotation (53) with longitudinal axis running transversely thereto, and the stationary transmitter section (9) containing at least one sensor for electromagnetic fields that is opposite the coil (10) at a distance, characterized in that the stationary transmitter section extends on both sides of the axis of rotation (53) transversely thereto and the sensor is connected on the output side to a circuit that has circuit components (22, 23, 24, 25, 26) for compensating or partially compensating the deviations, caused by asymmetries or inaccuracies in the arrangement of the transmitter sections (5, 9), of the output signal(s) of the stationary transmitter section (9) from a fixed relationship between the angular position of the rotatable transmitter section (5) and the output signal(s) of the stationary transmitter section (9).

2. Phase-angle sensor according to Claim 1, characterized in that the rotatably arranged coil (10) is connected to the secondary winding (15) of a rotary transformer whose primary winding (16) is fastened in the housing carrying the stationary transmitter section (9).

3. Phase-angle sensor according to Claim 1, characterized in that the components are such as serve to compensate the asymmetries and/or the signal amplitudes and/or the coil angle offset.

4. Phase-angle sensor according to Claim 1, characterized in that the stationary transmitter section (9) has two spirally wound coils (12, 13), which are offset with respect to one another by 90° with their longitudinal axes and whose outputs are connected in each case to the circuit.

5. Phase-angle sensor according to Claim 1, characterized in that at least the coil (10) of the rotatable transmitter section (5) is wound on a ferromagnetic core (11) in whose external field the stationary transmitter section (9) is arranged.

6. Phase-angle sensor according to one of the preceding claims, characterized in that the core (11) of the coil (10) of the rotatable transmitter section (5) is cuboid, and in that the coils (12, 13) of the stationary transmitter section (9) are arranged on a cylindrical disc core (14) made of a highly permeable material.

7. Phase-angle sensor according to one of the preceding claims, characterized in that the coil (10) with the cuboid core (11) is preferably fastened in the end face of a rotatable shaft made of non-magnetic material, while the coils (12, 13) wound on the disc core (14) are arranged at the bottom of a bore (6) of a housing (7), into which bore the shaft (2) projects.

8. Phase-angle sensor according to one of Claims 1 or 3 to 7, characterized in that the coil (10) of the rotatable transmitter section is connected via flexible leads to the alternating current source.

9. Phase-angle sensor according to one of the preceding claims, characterized in that the two coils (12, 13) of the stationary transmitter section (9) are constructed for the respective generation of a period of a sinusoidal and a cosinusoidal amplitude of the output voltage, as a function of the rotary position of the rotatable transmitter section (5) in the case of a complete rotation.

10. Phase-angle sensor according to one of Claims 1 to 8, characterized in that the two coils (12, 13) of the stationary transmitter section (9) are constructed for the generation, per rotation of the rotatable transmitter section (5), of in each case one period of a triangular voltage, the two voltages each being phase-shifted with respect to one another by a quarter period.

11. Phase-angle sensor according to one of Claims 1 to 9, characterized in that the output voltages of the two coils (12, 13) of the stationary transmitter section (9) are each connected via a phase-selected rectifier (18, 19) controlled by the alternating current source to an amplifier (20, 21), which has the circuit components (22, 23; 24, 25) with which compensation magnitudes can be varied.

12. Phase-angle sensor according to one of Claims 1 or 3 to 11, characterized in that an oscillator feeds the primary winding (16) of the rotary transformer, to the primary winding (16) of which there is connected a phase-related sampling signal generation (30), controlled by the oscillator (28), to which one control electrode each of an FET switch (41, 42) is connected, which switch is connected in series with a coil (12, 13) of the stationary transmitter section (9) and resistors (43, 44; 45, 46, 51, 52) to the inputs of an operational amplifier (47, 48), whose variable gain and superimposable voltage transformer section serves to set the compensation values.

13. Phase-angle sensor according to one of the preceding claims, characterized in that the circuit for compensating the deviations, caused by asymmetries or inaccuracies in the arrangement of the transmitter sections (5, 9), of the output signals of the stationary transmitter section (9) is arranged at or near the transmitter sections (5, 9) in the same housing (7).

14. Phase-angle sensor according to one of the preceding claims, characterized in that at least the transmitter sections (5, 9) and the circuit are surrounded by a shield against electromagnetic fields.

15. Phase-angle sensor according to one of the preceding claims, characterized in that the angular offset between the two coils (12, 13) of the stationary transmitter section (9) can be compensated by the correctly signed superimposition of a value, proportional to the tangent of the offset angle, of one output voltage onto the other output voltage.

16. Method of setting a phase-angle sensor according to one of the preceding claims, characterized in that firstly the extreme values of the output voltage of at least one sensor channel are measured in the case of a complete rotation of the rotatable section, and that thereafter the setting values of the circuit components (22, 23, 24, 25) are matched such that the compensation computed from the extreme values is achieved.

17. Method of setting a phase-angle sensor according to one of Claims 1 to 15, characterized in that the output voltages of the sensor channels are firstly measured for predetermined angular positions, in that thereafter the error coefficients ($\alpha_0$, $\alpha_1$, $\alpha_3$....) of Fourier equations of the type: $\Delta \alpha(\alpha) = \alpha_0 + \alpha_1 \sin\alpha + \alpha_2 \cos\alpha_2 + \alpha_3 \sin(2\alpha) +$.... are determined from the measured values, where $\alpha$ is the angular position, $\alpha_0$ the angular zero-point error, $\alpha_1$ the assymetry of a cosine function, $\alpha_2$ the assymetry of a sine function, and $\alpha_3$ characterized the amplitude ratio of the two output voltages, and in that the coefficient $\alpha_0$ is used for zero-point adjustment of the axis of rotation and the coefficients $\alpha_1$, $\alpha_2$, $\alpha_3$ are used to set the circuit components (22, 23, 24, 25).

FIG.1

α

53

1

2

6

7

15

16

5

4

10

11

3

13

8

9

14

12

G

FIG.2

10

11

13

12

14

FIG.3a

FIG.3b

FIG.3c

FIG.4

$U_1 = U_A \cdot \sin \alpha$

$U_2 = U_A \cdot \cos \alpha$

FIG.5

FIG.6

$$U_1 = U_A \cdot \sin \alpha$$

$$U_1' = U_A \cdot \sin \alpha$$

$$U_2' = U_A \cdot \cos(\alpha \pm \varphi)$$

$$U_2 \approx U_A \cdot \cos \alpha$$

$$\pm k \cdot U_1$$

FIG.7

**EP 0 259 538 B1**

**FIG.8**